# EUROPEAN PATENT SPECIFICATION

(11) **EP 1 288 087 B1**
(45) Date of publication and mention of the grant of the patent: **22.09.2004**
(21) Application number: 02015087.6
(22) Date of filing: 05.07.2002
(51) Int. Cl.: B60R 22/195

(54) **Seat belt system with a belt tensioner**
Sicherheitsgurtsystem mit einem Gurtstraffer
Système de ceinture de sécurité avec tendeur de sangle

(30) Priority: 23.08.2001 DE 10141297
(43) Date of publication of application: 05.03.2003
(73) Proprietor: KEY SAFETY SYSTEMS, INC., Sterling Heights, Michigan 48314 (US)
(72) Inventor: Specht, Martin, 82340 Feldafing (DE); Schwald, Stefan, 82211 Herrsching (DE)
(74) Representative: Nöth, Heinz

(56) References cited:
- WO-A-99/22969
- DE-A- 3 328 127

## Description

The invention relates to a vehicle seat belt with a belt tensioner in accordance with the precharacterising clause of Claim 1.

DE 33 28 127 A discloses such a vehicle seat belt which has an end fitting in form of seat belt retractor by which an end of the belt webbing is secured to the vehicle. A belt tensioner acts with an engagement part on the belt webbing of the seat belt in the vicinity of the end fitting for the purpose of transmitting a tensioning movement to the seat belt. The belt webbing is guided with a belt guide and the engagement part has a barrel-shaped pulling rod by which a pulling movement generated by the tensioning drive may be transmitted to the belt webbing during tensioning. The pulling rod acts as a belt deflection rod for the belt webbing guided through the belt guide during the tensioning.

WO 99/22969 A discloses a rotary belt tensioner which wind the belt webbing onto a take-up reel during tensioning. For reducing the axial length of the rotary belt tensioner, the portion of the belt webbing to be wound up is folded about two fold edges to approximately half the belt width. The folded portion of the belt needs an additional length of belt webbing.

DE 195 45 898 C2 discloses providing, on the end fitting by which the end of the belt webbing of the seat belt is secured to the vehicle, a belt tensioner that is a pyrotechnically drivable winding shaft and which exerts a tightening retraction movement or a tensioning movement on the seat belt in the event of an accident.

Furthermore, DE 299 04 404 U1 discloses a belt tensioner in which the tensioning movement is transmitted to the belt webbing with the aid of a push rod. When the known belt tensioner is installed, an additional length of belt webbing is required in order to form a deflection loop which is laid around a deflection face provided at the push rod end.

The object of the invention is to provide a vehicle seat belt tensioner of the type mentioned at the outset in which installation of the belt tensioner can be adapted in a compact shape to predetermined installation requirements in the vehicle without an additional length of belt webbing.

This object is achieved in accordance with the invention by the characterising features of Claim 1.

In the invention, the length of the pulling rod corresponds to approximately half the width of the belt webbing guided through the engagement part in the folded condition. To this end, the belt webbing guided through the engagement part is folded about about two fold edges running in the longitudinal direction of the belt. The two fold edges are at a spacing from one another which corresponds to approximately half the width of the belt.

The belt guide may have two deflection points about which the belt webbing is guided during tensioning. The pulling rod is arranged such that it acts on the part of the belt guided between these two deflection points.

Furthermore, the belt guide may have two belt guiding points between which the belt webbing is guided in a straight line. In this embodiment, the engagement part and at least one of the two deflection points are arranged in the region of the belt webbing guided in a straight line in the belt guide.

### Brief Description of the Drawings

Fig. 1 is a side view of a seat belt system according to a first embodiment.
Fig. 2 is a side view of a seat belt system according to a second embodiment.
Fig. 3 is a perspective view of a third embodiment of a webbing guide in the pulling eyebolt of the belt tensioner.
Fig. 4 is a perspective view of an embodiment of a pulling eyebolt of the belt tensioner that may be used in the embodiments illustrated.
Fig. 5 is a perspective view of a further embodiment of a pulling eyebolt that may be used in the embodiments illustrated.
Fig. 6 is a perspective view of a folding device that is used in the foregoing embodiments.

### Detailed Description of the Invention

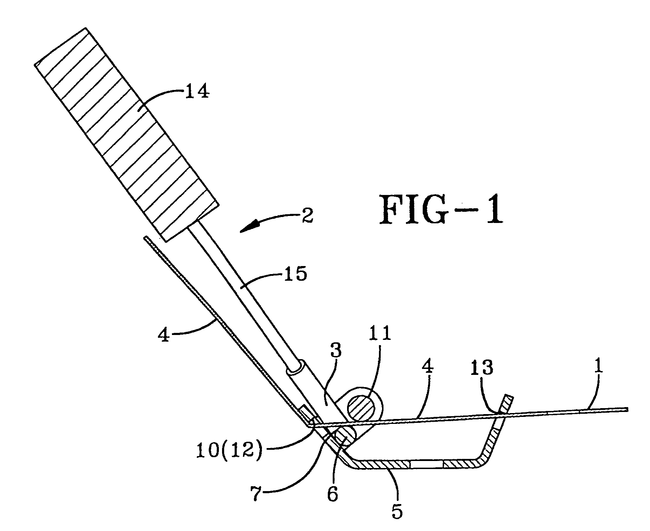

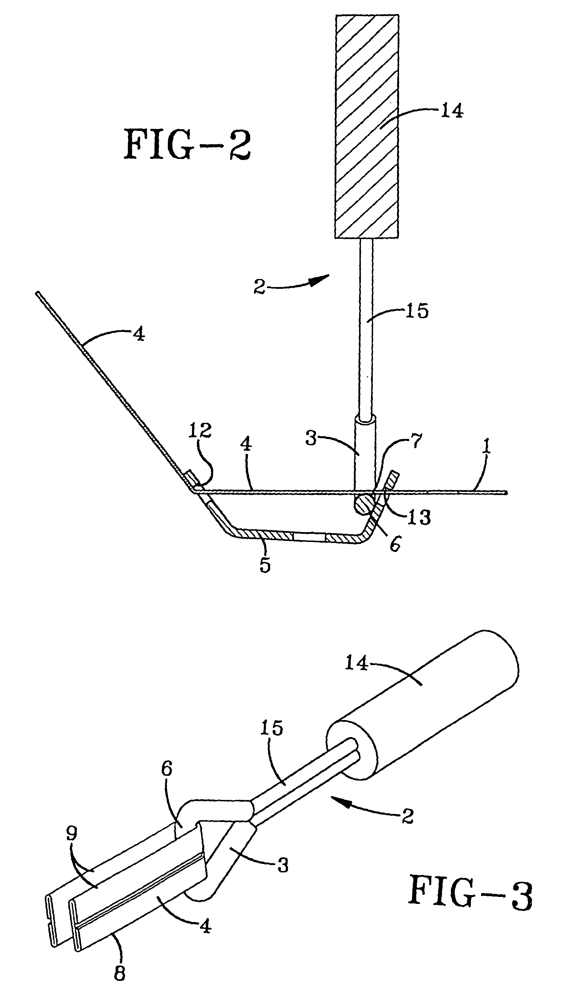

In the figures, exemplary embodiments of a vehicle seat belt, in particular a three-point seat belt, are illustrated, in which the belt sections of the seat belt in the region of the belt webbing, which is secured to an end fitting 1 on the vehicle body, are illustrated. Conventionally, provided on the end fitting 1 is a screw connection (not illustrated in more detail) by which the end of the belt webbing is anchored to the vehicle body. In the exemplary embodiments in Figures 1 and 2, a belt guide 5 is furthermore illustrated, by which part of the belt webbing 4 of the seat belt is guided in a straight line on the vehicle body in the vicinity of the end fitting 1. The belt guide 5 may also be secured to the vehicle by a screw connection (not illustrated in more detail). The belt guide 5 may also be made in one piece with the end fitting 1 and has two belt guiding points 12, 13 in the form of belt guiding edges. The belt guiding point 13 is located in the vicinity of the end fitting 1 and the belt guiding point 12 may be a deflection edge from which the belt webbing 4 is guided to another anchoring point of the three-point seat belt. This other anchoring point may be the deflection point located at shoulder height for the vehicle occupant or thereabove and which where appropriate is arranged in one structural unit with the belt winder. Structural units of this kind are used in particular for vehicle seat belts which are integrated within the seat and in rear benches of passenger vehicles.

The deflector fitting 1 is located in the region of the vehicle sill or is provided slightly above the vehicle sill, in particular in the region of the rear bench of the vehicle.

The exemplary embodiments illustrated have a belt tensioner 2 that has a tensioning drive 14, for example a linear drive. The tightening retraction movement generated by the tensioning drive 14 is transmitted to the belt webbing 4 by way of a pulling device 15, for example a cable pull or pair of cable pulls. To this end, an engagement part 3 in the form of a pulling eyebolt is provided at the front end of the pulling device 15. The pulling eyebolt preferably has the form of an isosceles triangle. At the base of this isosceles triangle is located a pulling rod 6 which acts on the belt webbing 4 during tensioning or a tightening retraction movement.

The pulling rod 6 acts on the part of the belt webbing 4 guided in a straight line in the belt guide 5.

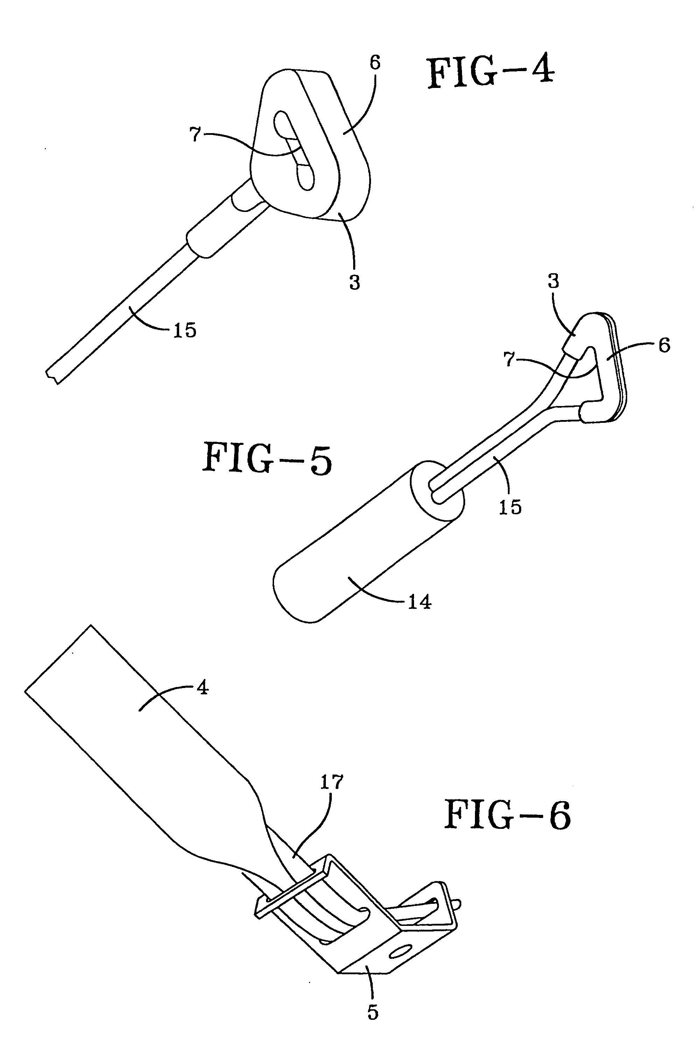

In Figures 1 the direction of pulling in which the pulling rod 6 is driven by the tensioning drive 4 is approximately parallel to the direction of guiding the belt in which the belt webbing 4 is guided from the belt guiding point 12, which at the same time acts as a belt deflection point 10, to the other anchoring point of the seat belt, in particular the belt deflection point on the vehicle which is located at shoulder height or thereabove. To this end, the pulling device 15 extends from the engagement part 3, approximately parallel to the belt webbing 4 or at an acute angle thereto, as can be seen in particular from Figures 1 and 5.

In this embodiment a belt deflection point 11 with a rounded belt deflection face is provided between the two belt guiding points 12, 13 of the belt guide 5. When the seat belt is tensioned, the pulling rod 6 moves through between the deflection point 10 already mentioned, which is formed by the belt guiding point 12, and the belt deflection point 11. At the same time, the belt webbing 4 is drawn between the two deflection points 10, 11 as a belt loop deflected around the pulling rod 6. As already mentioned, the deflection point 10 is formed by the belt guiding point 12. However, it is also possible to provide an additional deflection point 10 within the belt guide 5. During tensioning, the pulling rod 6 acts as a belt deflection rod or as a third belt deflection point, with the result that on tensioning the belt webbing 4 is retracted by approximately twice the length corresponding to the length of tightening retraction. perpendicular to the direction of guiding the belt webbing 4 in a straight line between the belt guiding points 12, 13 of the belt guide 5.

In Figure 2, the pulling rod 6 acts on the belt webbing 4 guided in a straight line between the two belt guiding points 12, 13. The point of action lies in the vicinity of the belt guiding point 13, which lies adjacent to the deflector fitting 1. An additional belt deflection point as provided in the embodiment of Figure 1 is missing in this embodiment. The direction of pulling in which the pulling rod 6 is moved by the tensioning drive 14 runs approximately perpendicular to the direction of guiding the belt webbing 4 between the belt guiding points 12, 13.

In the belt tensioner 2 illustrated in Figure 3, the length of the pulling rod 6 of the engagement part 3 corresponds to half the width of the belt webbing 4. The belt webbing 4 is folded about two fold edges 8, 9. The fold edges 8, 9 are at a spacing from one another corresponding to approximately half the belt width. The two outer strips of belt are folded towards one another in such a way that the side edges of the belt webbing 4 abut against one another. During assembly, the belt webbing 4, in the already folded condition, is inserted into the triangular engagement part 3 as a pulling eyebolt. During tensioning, the limbs of the triangular engagement part 3 that extend towards one another ensure that the folded shape is maintained on being guided around the pulling rod 6. As a result of this, the structural width of the belt tensioner is reduced. A folding device 17 is provided on the belt guide 5 (Fig. 6) and used during tensioning to fold the belt webbing guided to the other anchoring point into the shape shown in Figure 3.

The engagement part 3 is constructed to have low friction in particular in the region of the deflection face 7 of the pulling rod 6. A friction-reducing covering as illustrated in Figure 4 may be provided on the pulling rod 6 or on the entire engagement part 3. It is possible to provide a plastics material sheath which may be clipped on, as illustrated in Figure 5. The deflection face 7 is rounded, as can be seen in particular from Figures 1 and 2, with the result that a low-friction deflection face 7 is obtained when the seat belt is tensioned. It is also possible to construct the deflection face 7 as a rolling surface. The pulling rod 6 may in that case have a deflection roller or indeed a plurality of deflection rollers.

## Claims

1. A vehicle seat belt, in particular a three-point seat belt having an end fitting (1) by which an end of the belt webbing of the seat belt is secured to the vehicle, a belt tensioner (2) which acts with an engagement part (3) on the belt webbing (4) of the seat belt in the vicinity of the end fitting (1), for the purpose of transmitting a tensioning movement to the seat belt, wherein the engagement part (3) is a pulling eyebolt through which the belt webbing (4) is guided with a belt guide (5), and in that the engagement part (3) has a substantially straight pulling rod (6) by which a pulling movement generated by the tensioning drive (14) may be transmitted to the belt webbing (4) during tensioning, during which the pulling rod (6) acts as a belt deflection rod for the belt webbing (4) guided through the belt guide (5), **characterised in that** a folding device (17) is provided on the belt guide (5) and used to fold the belt webbing (4) guided through the engagement part (3) about two fold edges (8, 9) running in the longitudinal direction of the belt to approximately half the belt width and that the length of the pulling rod (6) corresponds to approximately half the width of the belt webbing (4).

2. A vehicle seat belt according to Claim 1, **characterised in that** the pulling rod (6) has a deflection face (7) of low friction.

3. A vehicle seat belt according to Claim 1, **characterised in that** the belt guide (5) has two deflection points (10, 11) about which the belt webbing (4) is guided during tensioning, with the pulling rod (6) acting on the part of the belt guided between these two deflection points (10, 11).

4. A vehicle seat belt according to one of Claims 1 to 3, **characterised in that** the belt guide (5) has two belt guiding points (12, 13) between which the belt webbing (4) is guided in a straight line.

5. A vehicle seat belt according to Claims 3 and 4, **characterised in that** the engagement part (3) and at least one of the deflection points (10, 11) are arranged in the region of the belt webbing guided in a straight line in the belt guide (5).

## Patentansprüche

1. Fahrzeug-Sicherheitsgurt, insbesondere ein Dreipunkt-Sicherheitsgurt, der einen Endanschluß (1), durch den ein Ende des Gurtbands des Sicherheitsgurts am Fahrzeug befestigt wird, einen Gurtspanner (2), der in der Nähe des Endanschlusses (1) mit einem Eingriffsteil (3) auf das Gurtband (4) des Sicherheitsgurts wirkt, um eine Spannbewegung auf den Sicherheitsgurt zu übertragen, hat, bei dem das Eingriffteil (3) ein Zugösenbolzen ist, durch den das Gurtband (4) mit einer Gurtführung (5) geführt wird, und bei dem das Eingriffsteil (3) eine wesentlich gerade Zugstange (6) hat, durch die eine durch die Spannvorrichtung (14) erzeugte Zugbewegung während des Spannens auf das Gurtband (4) übertragen werden kann, währenddessen die Zugstange (6) als eine Gurtablenkungsstange für das durch die Gurtführung (5) geführte Gurtband (4) wirkt, **dadurch gekennzeichnet, daß** an der Gurtführung (5) eine Faltvorrichtung (17) bereitgestellt wird und verwendet wird, um das durch das Eingriffsteil (3) geführte Gurtband (4) um zwei in der Längsrichtung des Gurts laufende Faltkanten (8, 9) auf ungefähr die halbe Gurtbreite zu falten, und daß die Länge der Zugstange (6) ungefähr der halben Breite des Gurtbands (4) entspricht.

2. Fahrzeug-Sicherheitsgurt nach Anspruch 1, **dadurch gekennzeichnet, daß** die Zugstange (6) eine Ablenkfläche (7) mit niedriger Reibung hat.

3. Fahrzeug-Sicherheitsgurt nach Anspruch 1, **dadurch gekennzeichnet, daß** die Gurtführung (5) zwei Ablenkpunkte (10, 11) hat, um die das Gurtband (4) während des Spannens geführt wird, wobei die Zugstange (6) auf den zwischen diesen zwei Ablenkpunkten (10, 11) geführten Teil des Gurts wirkt.

4. Fahrzeug-Sicherheitsgurt nach einem der Ansprüche 1 bis 3, **dadurch gekennzeichnet, daß** die Gurtführung (5) zwei Gurtführungspunkte (12, 13) hat, zwischen denen das Gurtband (4) in einer geraden Linie geführt wird.

5. Fahrzeug-Sicherheitsgurt nach den Ansprüchen 3 und 4, **dadurch gekennzeichnet, daß** das Eingriffsteil (3) und wenigstens einer der Ablenkpunkte (10, 11) in dem in einer geraden Linie in der Gurtführung (5) geführten Bereich des Gurtbands angeordnet werden.

## Revendications

1. Ceinture de sécurité pour un véhicule, en particulier ceinture de sécurité à trois points d'ancrage, comportant un dispositif d'extrémité (1) permettant de fixer une extrémité de la sangle de la ceinture de sécurité sur le véhicule, un dispositif de tension de la ceinture (2) coopérant avec un élément d'engagement (3) et agissant sur la sangle (4) de la ceinture de sécurité au voisinage du dispositif d'extrémité (1) en vue de transmettre un mouvement de tension vers la ceinture de sécurité, l'élément d'engagement (3) étant constitué par un anneau de traction assurant le guidage de la sangle de la ceinture (4) par l'intermédiaire d'un guide de la sangle (5), l'élément d'engagement (3) comportant une tige de traction pratiquement droite (6) permettant la transmission d'un mouvement de traction produit par l'entraînement de tension (14) vers la sangle de la ceinture (4) au cours de la tension, la tige de traction (6) faisant fonction de tige de déviation de la ceinture de sécurité (4) guidée par le guide de la ceinture (5), **caractérisée en ce qu'**un dispositif de pliage (17) est agencé sur le guide de la ceinture (5) et sert à plier la sangle de la ceinture (4) guidée à travers l'élément d'engagement (3) autour de deux bords de pliage (8, 9), s'étendant dans la direction longitudinale de la ceinture, sur environ la moitié de la largeur de la ceinture, la longueur de la tige de traction (6) correspondant à environ la moitié de la largeur de la sangle de la ceinture (4).

2. Ceinture de sécurité pour un véhicule selon la revendication 1, **caractérisée en ce que** la tige de traction (6) comporte une face de déviation (7) à frottement réduit.

3. Ceinture de sécurité pour un véhicule selon la revendication 1, **caractérisée en ce que** le guide de la ceinture (5) comporte deux points de déviation (10, 11) autour desquels est guidée la sangle de la ceinture (4) au cours de la tension, la tige de traction (6) agissant sur la partie de la ceinture guidée entre ces deux points de déviation (10, 11).

4. Ceinture de sécurité pour un véhicule selon l'une des revendications 1 à 3, **caractérisée en ce que** le guide de la ceinture (5) comporte deux points de guidage de la ceinture (12, 13) entre lesquels la sangle de la ceinture (4) est guidée en ligne droite.

5. Ceinture de sécurité pour un véhicule selon les revendications 3 et 4, **caractérisé en ce que** l'élément d'engagement (3) et au moins un des points de déviation (10, 11) sont agencés dans la région de la sangle de la ceinture guidée en ligne droite dans le guide de la ceinture (5).
